# FASCICULE DE BREVET EUROPEEN

(11) **EP 2 350 473 B1**
(45) Date de publication et mention de la délivrance du brevet: **14.12.2016**
(21) Numéro de dépôt: 09760174.4
(22) Date de dépôt: 19.10.2009
(51) Int. Cl.: F16B 23/00, F16B 37/00

(54) **MOYEN D'ENTRAÎNEMENT POLYGONAL À EMBASE INCORPORÉE**
POLYGONALES ANTRIEBSMITTEL MIT INKORPORIERTEM BUND
POLYGONAL DRIVE MEANS WITH INCORPORATED FLANGE

(30) Priorité: 20.10.2008 FR 0857127; 04.03.2009 FR 0951378
(43) Date de publication de la demande: 03.08.2011
(73) Titulaire: Lisi Aerospace, 75012 Paris (FR)
(72) Inventeur: BERTON, Anthony, F-95300 Pontoise (FR); GUERIN, Nicolas, F-95540 Mery sur Oise (FR)
(74) Mandataire: Ipside
(86) Numéro de dépôt international: PCT/FR2009/051990
(87) Numéro de publication internationale: WO 2010/046587

(56) Documents cités:
- FR-A- 2 251 741
- US-A- 5 324 148

## Description

La présente invention se rapporte à un moyen d'entraînement polygonal à embase incorporée comportant des pans (US 5 324 148 A).

Le domaine technique de l'invention est, d'une façon générale, celui des moyens d'entraînement. Plus particulièrement, l'invention concerne des écrous et des vis à embase incorporée de type tronconique.

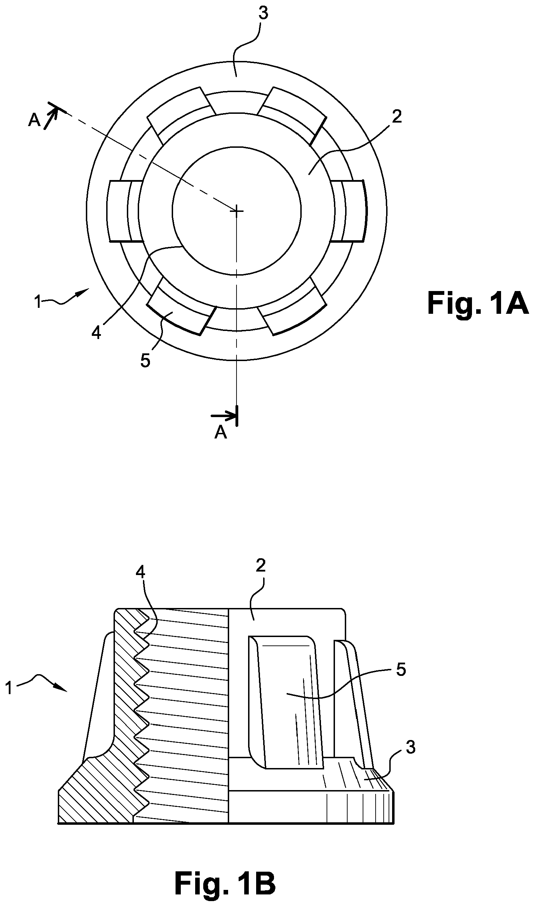

Dans l'état de la technique, on connaît notamment l'enseignement du modèle USD206402 qui divulgue un écrou renforcé à embase tronconique, représenté de façon schématique sur les figures 1A et 1B.

La figure 1A représente une vue de face d'un tel écrou 1 et la figure 1B représente une vue de profil partiellement en coupe du même écrou 1. Le plan de coupe est défini par les plans A-A. L'écrou 1 comporte un fût 2 et une embase tronconique 3. Une paroi intérieure cylindrique 4 de l'écrou 1 est taraudée et peut présenter un chambrage. Six contreforts 5 lient l'embase 3 au fût 2.

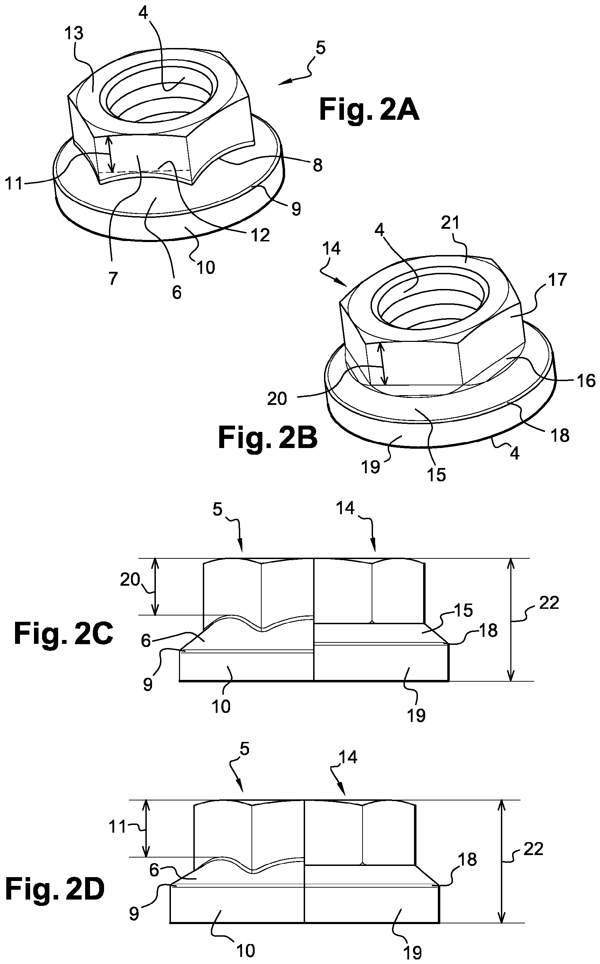

Dans l'état de la technique, on connaît également des écrous non-renforcés à embase tronconique tels que représentés sur les figures 2A et 2B et on retrouve les mêmes types de géométries en ce qui concerne les têtes de vis.

La figure 2A représente de façon schématique une vue en perspective oblique d'un exemple d'écrou forgé 5 à embase tronconique 6. Une intersection entre un fût hexagonal 7 et l'embase tronconique 6 de l'écrou forgé 5 comporte un congé de raccordement se présentant sous la forme d'un bourrelet en ellipse 8. Une base circulaire 9 du cône d'embase 6 se prolonge en un cylindre 10. Lorsqu'une douille de clé, non représentée, est enfilée autour du fût 7, une extrémité de la douille vient en butée contre les bourrelets en ellipse 8. Une hauteur 11, séparant un sommet 12 du bourrelet en ellipse d'une face supérieure 13 de l'écrou forgé 5, est effectivement en contact avec la douille lors d'un serrage et ou d'un desserrage de l'écrou forgé 5 ; c'est la hauteur de prise de clé ou hauteur utile 11. La paroi intérieure cylindrique 4 de l'écrou forgé 5 est taraudée et peut présenter un chambrage.

La figure 2B représente de façon schématique une vue en perspective oblique d'un exemple d'écrou usiné 14 à embase tronconique 15. Une intersection 16 entre un fût hexagonal 17 et l'embase tronconique 15 de l'écrou usiné 14 est usinée de façon à ce qu'elle forme une arête et à ce que le fût 17 présente des faces parfaitement rectangulaires. Une base circulaire 18 du cône d'embase 15 se prolonge en un cylindre 19. Lorsqu'une douille de clé, non représentée, est enfilée autour du fût 17, une extrémité de la douille vient en butée contre les intersections 16. Une hauteur utile 20, séparant une intersection 16 d'une face supérieure 21 de l'écrou usiné 14, est effectivement en contact avec la douille lors d'un serrage et ou d'un desserrage de l'écrou usiné 14. La paroi intérieure cylindrique 4 de l'écrou usiné 14 est taraudée et peut présenter un chambrage.

Pour des dimensions identiques, la hauteur utile 11 de l'écrou forgé 5 est donc moins longue que la hauteur utile 20 de l'écrou usiné 14. A cause des bourrelets en ellipse 8, la surface d'appui avec la douille de clé adaptée est moins importante, ce qui diminue le couple transmissible.

La figure 2C représente schématiquement une vue de profil d'une moitié d'écrou forgé 5 à embase tronconique 6 et d'une moitié d'écrou usiné 14 à embase tronconique 15 de l'état de la technique. Sur cette figure, on voit que, pour une même hauteur globale 22, les embases 15 et 6 sont différentes et que la hauteur 20 de prise de clé est identique. En particulier, la partie cylindrique 10 est moins haute que la partie cylindrique 19.

La figure 2D représente schématiquement une vue de profil d'une moitié d'écrou forgé 5 à embase tronconique 6 et d'une moitié d'écrou usiné 14 à embase tronconique 15 de l'état de la technique. Sur cette figure, on voit que les embases 15 et 6 sont identiques et que la hauteur 11 de prise de clé de l'écrou forgé 5 est inférieure à celle 20 de l'écrou usiné 14.

Il apparaît que suivant le procédé de fabrication, les dimensions des écrous à embase de même référence, i.e. de même filetage intérieur, peuvent varier. Il en est de même pour tous les moyens d'entraînement tels que les têtes de vis. C'est pourquoi, dans le texte qui suit il faut garder l'idée que l'invention concerne tous les moyens d'entraînement à embase incorporée.

Il convient d'abord, si l'on souhaite disposer de la même hauteur utile de prise de clé pour un moyen d'entraînement forgé que pour un moyen d'entraînement usiné, d'augmenter la hauteur du fût d'une longueur égale à la hauteur d'un bourrelet, la hauteur totale du moyen d'entraînement en est augmentée d'autant.

Cette hétérogénéité des hauteurs de fût pour des moyens d'entraînement destinés aux mêmes utilisations pose de nombreux problèmes techniques.

En effet, puisque la hauteur du fût d'un moyen d'entraînement forgé est supérieure à celle d'un fût d'un moyen d'entraînement usiné, les moyens d'entraînement forgés ont plus de volume, donc plus de masse et plus de matière, ce qui est problématique et coûteux pour leur stockage, leur transport, et leur utilisation dans un avion notamment.

Si, à l'opposé, on réduit la hauteur de l'embase, cette réduction s'exerce au détriment de la tenue mécanique, c'est-à-dire de la résistance de l'embase.

Enfin, puisque les moyens d'entraînement forgés sont généralement produits en grand nombre par rapport aux moyens d'entraînement usinés, les problèmes précités sont d'autant plus handicapants.

Sur la version usinée on remarque de nombreuses arêtes dans une zone de transition entre les six pans et l'embase. Ces arêtes dues au procédé d'usinage ne sont pas adaptées à la forge. En effet il est impossible de forger des formes anguleuses identiques car cela pose des problèmes de remplissage matière. Aussi pour la version forgée, des congés elliptiques remplacent les arêtes d'usinage pour faciliter le remplissage d'une matrice par la matière choisie telle qu'un alliage de titane, ou un acier inoxydable, ou un alliage de nickel, ou encore un alliage d'aluminium.

Ensuite, pour une même hauteur de prise de clé et une même hauteur de moyen d'entraînement, le moyen d'entraînement usiné et le moyen d'entraînement forgé n'ont pas la même hauteur d'embase. De ce fait la résistance de l'embase est moins importante sur un moyen d'entraînement forgé.

Afin d'avoir une résistance équivalente de l'embase usinée et de l'embase forgée, il faut soit augmenter la hauteur du moyen d'entraînement forgé, ce qui présente l'inconvénient de le rendre plus lourd que le moyen d'entraînement usiné, soit diminuer la hauteur de prise de clé, ce qui diminue le couple transmissible pour le serrage et le desserrage.

Une solution à embase incorporée proposée par l'invention est adaptée à tous les modes de fabrication tels que l'usinage, le forgeage, le frittage, le moulage, l'injection plastique, et ce sans affecter les dimensions du moyen d'entraînement, ni sa résistance, ni son mode de mise en place.

La modification principale a été apportée sur l'embase où un évidemment en bas de chaque pan permet d'éviter les bourrelets en ellipse du procédé de forgeage.

Des congés de raccordement sont ménagés entre les pans en creux et les faces du fût hexagonal du moyen d'entraînement, préférentiellement des rayons, des ellipses ou toute autre forme permettant un bon écoulement de matière pendant la forge.

Dans l'état de la technique, lors d'un vissage ou d'un dévissage d'un moyen d'entraînement au moyen d'un outil motorisé, la vitesse de rotation du moyen d'entraînement entraîne, par frottement, une forte augmentation de la température du moyen d'entraînement.

Cette température élevée pose divers problèmes techniques :
- l'opérateur peut se brûler en tenant manuellement la vis ou l'écrou,
- le matériau sur lequel est réalisé le vissage peut être endommagé et déformé, surtout lorsqu'il s'agit d'un matériau composite de type aéronautique.
- le revêtement, par exemple anticorrosif et/ou lubrifiant, déposé sur la vis ou sur l'écrou, peut être détérioré, ce qui nuit à son efficacité,
- le freinage, appliqué sur certains écrous pour les empêcher de se dévisser une fois mis en place, peut être dégradé.

L'invention présente de nombreux avantages.

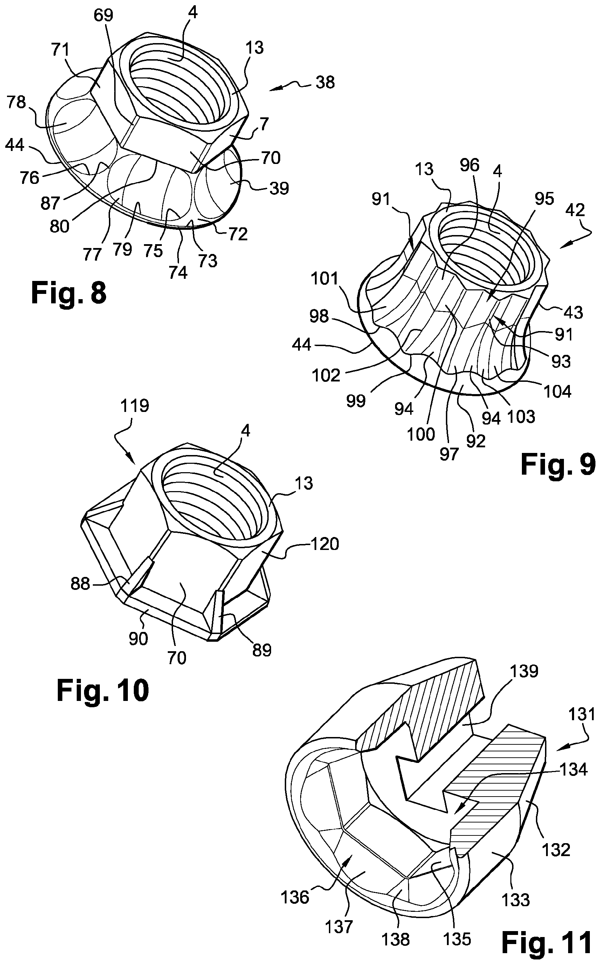

Un évidement réalisé en bas de chaque pan permet une diminution de la masse du moyen d'entraînement. Cet évidement n'affecte pas la résistance mécanique du moyen d'entraînement car la zone évidée est très peu sollicitée mécaniquement. Idéalement, un moyen d'entraînement comme représenté sur la figure 10 correspond à un évidement maximal en termes de masse.

La conception est universelle, de ce fait tous les modes de fabrication sont possibles sans changement majeur de dimensions. Il n'y a plus de problème sur la hauteur de prise de clé et la masse reste identique.

Un moyen d'entraînement à forme unique pour une même référence, quel que soit le procédé de fabrication, permet visuellement de reconnaître plus facilement le moyen d'entraînement et sa taille.

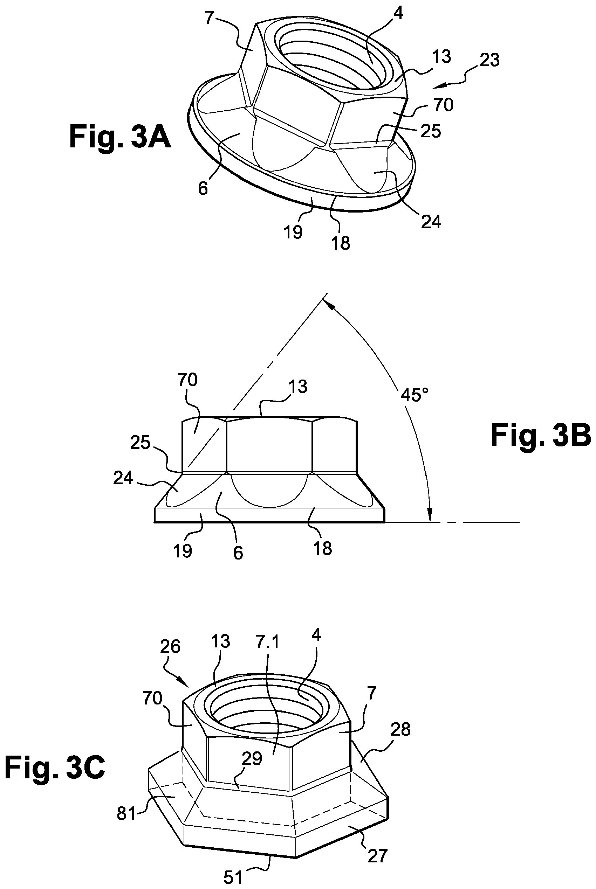

Les évidements réalisés en forme étoilée sur l'embase peuvent prendre plusieurs formes représentées sur les figures 3 à 10. De plus, ce type de solution peut s'appliquer à un moyen d'entraînement bi-hexagonal.

L'embase incorporée selon l'invention, du fait de sa masse diminuée par évidement de matière, présente une caractéristique de diffusion thermique augmentée, ce qui diminue l'amplitude et la durée de la hausse de température du moyen d'entraînement lors de son vissage et ou de son dévissage et permet de résoudre au moins en partie les problèmes précédemment décrits.

Ainsi, dans l'invention, on a eu l'idée de supprimer les bourrelets en ellipse 8 pour disposer d'une hauteur utile identique à la hauteur de fût. Pour ce faire, on enfonce l'embase tronconique vers son centre dans le prolongement des faces du fût.

Grâce à l'invention, on obtient les mêmes dimensions de moyen d'entraînement en mode usiné et en mode forgé, conduisant à une masse identique et à des mêmes prises de clés et donc à des couples transmissibles identiques.

La solution à forme d'embase étoilée proposée permet de s'affranchir du procédé de fabrication au niveau des dimensions du moyen d'entraînement, et d'obtenir un gain de masse pour une résistance et une prise de clé identiques. La forme étoilée permet de transmettre un couple de serrage et de desserrage plus important, en utilisant un outillage adapté à cette forme.

Les pans en creux générés par l'invention permettent de pouvoir réaliser simplement différents coloriages et ou marquages tels que la référence de la pièce, un repère de diamètre, la matière utilisée, jusque-là difficiles sur un moyen d'entraînement à embase classique.

L'invention a donc pour objet un moyen d'entraînement polygonal à embase incorporée, obtenue par forgeage au moyen d'une matrice ou par usinage, caractérisé en ce que
- l'embase comporte des pans en creux par rapport à une surface de l'embase et alignés avec des faces latérales du moyen d'entraînement.

L'invention concerne également une douille cylindrique de serrage et de desserrage d'un moyen d'entraînement polygonal selon l'invention, la douille comportant une cavité avec un fût creux polygonal et une extrémité ménagée pour être mise en butée contre une embase incorporée du moyen d'entraînement, l'extrémité de la douille présentant des faces de forme complémentaire à celle de l'embase pour être plaquées contre elle lors de la mise en butée, caractérisée en ce que
- l'embase comporte des pans en creux par rapport à une surface de l'embase et alignés avec des faces latérales d'un fût du moyen d'entraînement.

L'invention et ses différentes applications seront mieux comprises à la lecture de la description qui suit et à l'examen des figures qui l'accompagnent. Celles-ci ne sont présentées qu'à titre indicatif et nullement limitatif de l'invention. Les figures montrent :
- figure 1A, déjà décrite : une représentation schématique d'une vue de face d'un exemple d'écrou renforcé de l'état de la technique,
- figure 1B, déjà décrite : une représentation schématique d'une vue de profil partiellement en coupe du même exemple d'écrou,
- figure 2A, déjà décrite : une représentation schématique d'une vue en perspective oblique d'un exemple d'écrou forgé à embase tronconique de l'état de la technique,
- figure 2B, déjà décrite : une représentation schématique d'une vue en perspective oblique d'un exemple d'écrou usiné à embase tronconique de l'état de la technique,
- figure 2C, déjà décrite : une représentation schématique d'une vue de profil d'une moitié d'écrou forgé à embase tronconique et d'une moitié d'écrou usiné à embase tronconique de l'état de la technique,
- figure 2D, déjà décrite : une représentation schématique d'une vue de profil d'une moitié d'écrou forgé à embase tronconique et d'une moitié d'écrou usiné à embase tronconique de l'état de la technique,
- figure 3A : une représentation schématique d'une vue en perspective oblique d'un premier exemple d'écrou avec un moyen d'entraînement à embase tronconique selon l'invention,
- figure 3B : une représentation schématique d'une vue de profil du premier exemple d'écrou avec un moyen d'entraînement à embase tronconique selon l'invention,
- figure 3C : une représentation schématique d'une vue en perspective oblique d'un deuxième exemple d'écrou avec un moyen d'entraînement selon l'invention,
- figure 5 : une représentation schématique d'une vue en perspective oblique d'un troisième exemple d'écrou avec un moyen d'entraînement selon l'invention,
- figure 6 : une représentation schématique d'une vue en perspective oblique d'un quatrième exemple d'écrou avec un moyen d'entraînement selon l'invention,
- figure 7 : une représentation schématique d'une vue en perspective oblique d'un cinquième exemple d'écrou avec un moyen d'entraînement selon l'invention,
- figure 8 : une représentation schématique d'une vue en perspective oblique d'un sixième exemple d'écrou avec un moyen d'entraînement selon l'invention,
- figure 9 : une représentation schématique d'une vue en perspective oblique d'un septième exemple d'écrou avec un moyen d'entraînement selon l'invention,
- figure 10 : une représentation schématique d'une vue en perspective oblique d'un modèle minimisé d'écrou avec un moyen d'entraînement selon l'invention,
- figure 11 : une représentation schématique d'une vue en perspective oblique d'une douille partiellement en coupe pour le premier exemple de moyen d'entraînement selon l'invention,
- figure 12 : une représentation schématique d'une vue en perspective oblique d'un huitième exemple d'écrou avec un moyen d'entraînement selon l'invention muni d'une rondelle permettant un rotulage,
- figure 13 : une représentation schématique d'une vue en perspective oblique d'un exemple de vis avec un moyen d'entraînement selon l'invention.

La figure 3A représente, de façon schématique, une vue en perspective oblique d'un premier exemple d'écrou avec un moyen d'entraînement 23 à embase tronconique 6 selon l'invention. Dans un exemple, le moyen d'entraînement 23 et ses variantes représentées sur les figures suivantes sont obtenus par forgeage au moyen d'une matrice. Dans des variantes, lesdits moyens d'entraînement peuvent aussi être obtenus par un autre mode de fabrication tel que, par exemple, l'usinage, le moulage, l'injection plastique, le frittage, de façon à avoir des moyens d'entraînement identiques en utilisation, quel que soit le mode de fabrication. Le moyen d'entraînement 23 comporte un fût polygonal, ici hexagonal 7 et une embase tronconique 6. Selon l'invention, l'embase 6 est munie de pans 24 en creux. Dans l'exemple de la figure 3, les pans 24 sont plans. Selon l'invention, en creux signifie qu'une portion de face est en désalignement vers l'intérieur par rapport à la surface courbe tronconique. Une base circulaire 18 du cône d'embase 6 se prolonge en un cylindre 19. Le moyen d'entraînement 23 comporte des congés 25 de raccordement ménagés entre les pans 24 en creux et des faces latérales plates 70 du fût 7. Dans un exemple préféré, le moyen d'entraînement 23 et ses variantes décrites ci-après sont réalisés en alliage de titane et recouverts d'un revêtement à base d'une résine organique chargée en polytétrafluoréthylène, aussi appelé PTFE. Dans des variantes, il peut être réalisé en acier inoxydable, ou en alliage de nickel, ou en alliage d'aluminium. La paroi intérieure cylindrique 4 de le moyen d'entraînement usiné 23 est taraudée et peut présenter un chambrage.

La figure 3B représente schématiquement une vue de profil du premier exemple d'écrou avec un moyen d'entraînement 23 à embase tronconique 6 selon l'invention. Typiquement, la surface tronconique de l'embase 6 forme un angle d'au moins quarante-cinq degrés avec le plan de la base circulaire 18 considéré comme étant horizontal.

La figure 3C représente schématiquement une vue en perspective oblique d'un deuxième exemple d'écrou avec un moyen d'entraînement 26 selon l'invention. Dans cet exemple, le moyen d'entraînement 26 comporte un fût hexagonal 7 et présente une embase pyramidale hexagonale 28. Les pans plans 81 constituent ici l'embase 28. Une base hexagonale 51 de la pyramide d'embase 28 se prolonge en un parallélépipède 27. Le moyen d'entraînement 26 comporte des congés 29 de raccordement ménagés entre les pans 81 de l'embase 28 et ses faces latérales plates 70. La paroi intérieure cylindrique 4 du moyen d'entraînement usiné 26 est taraudée et peut présenter un chambrage.

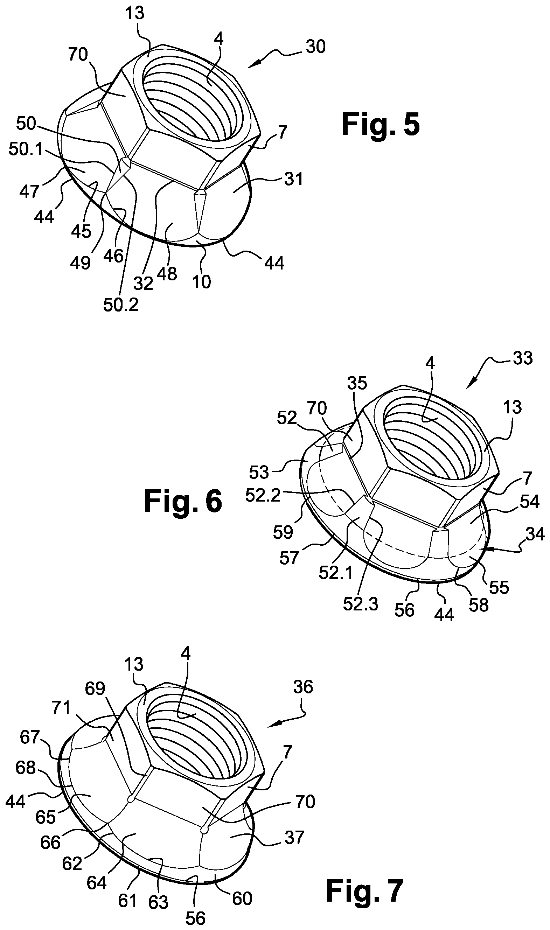

La figure 5 représente schématiquement une vue en perspective oblique d'un troisième exemple d'écrou avec un moyen d'entraînement 30 selon l'invention. Dans cet exemple, le moyen d'entraînement 30 comporte un fût hexagonal 7 et une embase mi-cylindrique 10, mi-tronconique 50, et munie de pans 31 en creux par rapport au tronc de cône. Ici, les pans 31 sont plans et fortement inclinés. Plus précisément, les pans 31 coupent le cylindre 10 au niveau d'une périphérie d'une face inférieure 44 du moyen d'entraînement 30. Les pans 31 présentent à l'intersection avec ce cylindre 10 des segments elliptiques 45 et 46. Deux pans adjacents 47 et 48, parmi tous les pans 31, se rejoignent ainsi à l'intersection 49 des deux segments elliptiques 45 et 46. Plutôt que de comporter une arête correspondant à l'intersection de ces deux pans 47 et 48, l'embase 10 comporte à l'endroit de cette intersection, une portion de surface tronconique de raccordement 50 présentant quasiment une forme de triangle car ses deux côtés les plus longs 50.1 et 50.2 sont des ellipses de très faible courbure. Le moyen d'entraînement 30 comporte des congés 32 de raccordement ménagés entre les pans 31, et les faces latérales plates 70. La paroi intérieure cylindrique 4 du moyen d'entraînement usiné 30 est taraudée et peut présenter un chambrage.

La figure 6 représente schématiquement une vue en perspective oblique d'un quatrième exemple d'écrou avec un moyen d'entraînement 33 selon l'invention. Le moyen d'entraînement 33 comporte un fût hexagonal 7 et une embase mi-tronconique 52, mi-arrondie 53 munie de pans en creux 34 sous forme de languettes. Une base circulaire 56 du cône de la partie arrondie 53 se prolonge en un cylindre 57 de faible épaisseur. Les pans en creux 34 sont plans. Le moyen d'entraînement 33 comporte des congés 35 de raccordement ménagés entre la partie plane 54 des pans 34 et les faces latérales plates 70. Une partie supérieure 54 des pans 34 coupe la partie tronconique 52 pour ne laisser subsister qu'une portion de surface tronconique de raccordement 52.1 présentant quasiment une forme de trapèze car ses deux côtés les plus longs 52.2 et 52.3 sont des ellipses de très faible courbure. La partie inférieure 55 des pans 34 coupe la partie arrondie 53 et forment ainsi à cette intersection un segment elliptique 58 de grande courbure dont un sommet 59 affleure la base circulaire 56. Dans une variante, le pan est parallèle à une génératrice du cône d'embase et forme ainsi, à l'intersection, deux segments rectilignes. La paroi intérieure cylindrique 4 du moyen d'entraînement usiné 33 est taraudée et peut présenter un chambrage.

La figure 7 représente schématiquement une vue en perspective oblique d'un cinquième exemple d'écrou avec un moyen d'entraînement 36 selon l'invention. Le moyen d'entraînement 36 comporte un fût hexagonal 7 et une embase tronconique 60 munie de pans en creux concaves 37. Une base circulaire 56 du cône d'embase 60 se prolonge en un cylindre 61 de faible épaisseur. Les pans 37 coupent l'embase tronconique 60 et forment ainsi à ces intersections des segments elliptiques 62 et 67 dont des sommets 63 et 68 affleurent la base circulaire 56. Deux pans adjacents 64 et 65, parmi tous les pans 37, se rejoignent ainsi à l'intersection 66 des deux segments elliptiques 62 et 67 et forment une arête concave 68 qui s'étend jusqu'à une arête droite 69 séparant deux faces plates 70 et 71 parmi les six faces du fût hexagonal 7. La paroi intérieure cylindrique 4 du moyen d'entraînement usiné 36 est taraudée et peut présenter un chambrage.

La figure 8 représente schématiquement une vue en perspective oblique d'un sixième exemple d'écrou avec un moyen d'entraînement 38 selon l'invention. Le moyen d'entraînement 38 comporte un fût hexagonal 7 et une embase tronconique 72 munie de pans en creux concaves 39. Une base circulaire 73 du cône d'embase 72 se prolonge en un cylindre 74 de faible épaisseur. Les pans 39 coupent l'embase tronconique 72 et forment ainsi, à ces intersections, des segments 75 et 76 hémisphériques. Deux pans adjacents 77 et 78 parmi tous les pans 39 se rejoignent en un point d'intersection 87 des deux segments elliptiques 75 et 76, ledit point d'intersection 87 étant sur un même axe qu'une arête droite 69 séparant deux faces plates 70 et 71 parmi les six faces du fût hexagonal 7. Un sommet inférieur 79 du segment 75 affleure la base circulaire 73. Un sommet supérieur 87 du segment 75 rejoint continument la face 70 ; i.e. sans congé de raccordement. La paroi intérieure cylindrique 4 du moyen d'entraînement usiné 38 est taraudée et peut présenter un chambrage.

La figure 9 représente schématiquement une vue en perspective oblique d'un septième exemple d'écrou avec un moyen d'entraînement 42 selon l'invention. Le moyen d'entraînement 42 comporte un fût bi-hexagonal 91 et une embase tronconique 92 munie de douze pans 95 en sillons 102. Les sillons 102 séparent les pans 95 en deux faces 103 et 104. Les faces du fût 91 présentent une partie cylindrique 93 et une partie concave 94. Les pans 95 présentent une partie plate 96 et une partie concave 97. Les pans 95 coupent l'embase tronconique 92 et forment ainsi, à ces intersections, des segments 98 et 99 en dents de scie. Deux pans adjacents 100 et 101 parmi tous les pans 95 coupent l'embase tronconique 92 pour ne laisser subsister qu'une petite partie 93 et 94 de raccordement des douze faces du fût 91. La paroi intérieure cylindrique 4 du moyen d'entraînement usiné 42 est taraudée et peut présenter un chambrage.

La figure 10 représente schématiquement une vue en perspective oblique d'un modèle minimisé d'écrou avec un moyen d'entraînement 119 selon l'invention, correspondant à un évidement maximal de matière n'affectant pas la résistance mécanique, avec des contreforts 88 et 89 situés de part et d'autre de l'alignement d'une face 70 du fût 120 de grande hauteur par rapport aux variantes de moyen d'entraînement précédentes. Les contreforts 88 et 89 se présentent ici sous la forme de deux triangles rectangles de faible épaisseur. Les contreforts 88 et 89 sont liés par leur base inférieure via une embase hexagonale plate 90 de faible épaisseur. La paroi intérieure cylindrique 4 du moyen d'entraînement usiné 119 est taraudée et peut présenter un chambrage.

La figure 11 représente schématiquement une vue en perspective oblique d'une douille 131 partiellement en coupe selon l'invention. La douille 131 présente une forme extérieure mi-tronconique 132, mi-cylindrique 133. Une telle douille est destinée à un serrage et un desserrage d'un des moyens d'entraînement 23, 26, 30, 33, 36, 38, 42, ou 119 selon l'invention représentés sur les précédentes figures. Dans cet exemple, la douille 131 comporte une cavité 134 avec un fût creux polygonal 135, ici hexagonal, et une extrémité 136 ménagée pour être mise en butée contre l'embase tronconique 6 du moyen d'entraînement 23 représenté sur la figure 3. L'extrémité 136 présente des faces 137 et 138 de forme complémentaire à celle des pans creux 24 et de l'embase 6 du moyen d'entraînement 23 pour être plaquées contre eux lors de la mise en butée. La douille 131 comporte enfin un fût creux carré 139 destiné à accueillir une extrémité d'une clé de serrage et de desserrage non représentée.

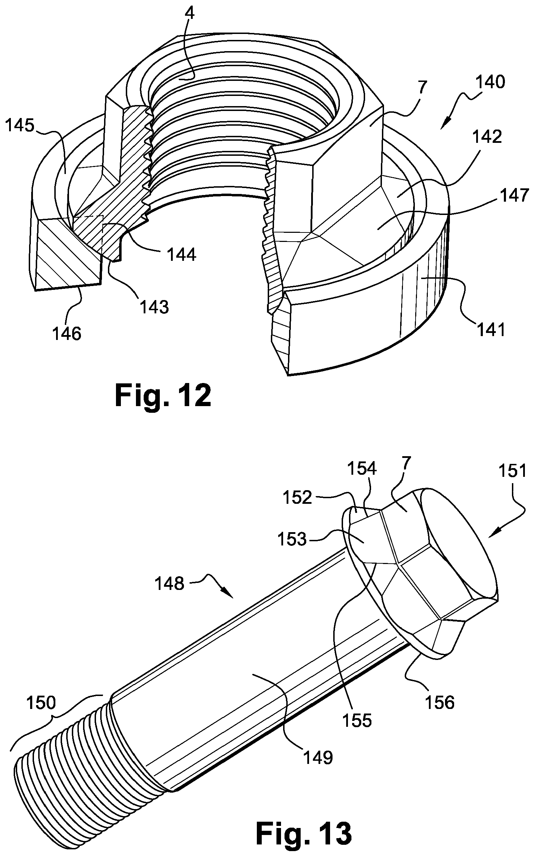

La figure 12 représente schématiquement une vue en perspective oblique d'un huitième exemple d'écrou avec un moyen d'entraînement 140 selon l'invention muni d'une rondelle 141 permettant un rotulage. Le moyen d'entraînement 140 comporte un fût hexagonal 7 et une embase tronconique 142 munie de pans en creux 147, ici plans. Les pans 147 coupent l'embase tronconique 142. La paroi intérieure cylindrique 4 de l'écrou usiné 140 est taraudée et peut présenter un chambrage. L'embase 142 présente une face d'appui inférieur sphérique 143, complétée et articulée, à la manière d'une rotule, avec la rondelle 141 permettant le rotulage. La rondelle 141 présente un diamètre supérieur à celui de l'embase 142. Dans un exemple, la section de la rondelle 141 a la forme d'un rectangle, voire d'un carré, dont on aurait biseauté, en arc de cercle, un angle intérieur 144 en contact avec la face inférieure 143 de l'embase 142. La rondelle 141 présente ainsi un logement concave 145, en portion de sphère, pour accueillir l'embase 142 à appui sphérique. De cette manière, lorsque le moyen d'entraînement 140 est vissé autour d'une vis pour serrer un élément, une face inférieure 146, ici plate, de la rondelle 141 intercalée appuie contre ledit élément, même si l'axe de la vis n'est pas perpendiculaire à la surface de l'élément à serrer, à l'endroit du serrage. Le désalignement d'un axe central de la rondelle 141 par rapport à l'axe de vissage peut présenter une amplitude de plus ou moins dix degrés.

La figure 13 représente schématiquement une vue en perspective oblique d'un exemple de vis 148 avec un moyen d'entraînement selon l'invention. La vis 148 comporte une tige 149 dont au moins une partie 150 est filetée, et un moyen d'entraînement polygonal 151 se présentant sous la forme d'une tête de vis. La tête 151 comporte un fût polygonal 7, ici hexagonal, et une embase tronconique incorporée 152 obtenue par forgeage au moyen d'une matrice ou par usinage. Pour optimiser la hauteur de prise de clé, selon l'invention, l'embase 152 comporte des pans en creux 153, ici plans, alignés avec des faces latérales du fût 7 de la tête 151 de vis 148. Les pans 153 coupent l'embase tronconique 152 et forment ainsi à ces intersections des segments elliptiques 154 et 155. Une face inférieure circulaire 156 de l'embase 152 est de préférence plate de manière à appuyer contre un élément à serrer. Tous les profils utilisés pour les moyens d'entraînement des figures 3 à 11 peuvent servir aussi pour la tête 151 de vis 148. Une rondelle, classique ou du type de celle vue avec la figure précédente dans le cas d'une embase à appui sphérique, peut être intercalée entre la face inférieure 156 et ledit élément à serrer.

## Revendications

1. Moyen d'entraînement polygonal (23 ; 26 ; 30 ; 33 ; 36 ; 38 ; 42 ; 119 ; 140 ; 151) présentant une embase incorporée (6 ; 28 ; 50 ; 52 ; 60 ; 72 ; 92 ; 142 ; 152) comportant des pans, **caractérisée en ce que**
- les pans (24 ; 31 ; 34 ; 37 ; 39 ; 41 ; 43 ; 81 ; 97 ; 147 ; 153) sont en creux par rapport à une surface (50 ; 52) de l'embase et alignés avec des faces latérales (70 ; 71 ; 93 ; 96) d'un fût (7 ; 91) du moyen d'entraînement.

2. Moyen d'entraînement selon la revendication 1 **caractérisé en ce que**
- les pans en creux sont plans ou concaves.

3. Moyen d'entraînement selon l'une des revendications 1 à 2 **caractérisé en ce que**
- il est obtenu par forgeage au moyen d'une matrice, usinage, moulage, frittage, ou injection plastique.

4. Moyen d'entraînement selon l'une des revendications 1 à 3 **caractérisé en ce que**
- le fût est hexagonal ou bi-hexagonal et l'embase est tronconique.

5. Moyen d'entraînement selon l'une des revendications 1 à 4 **caractérisé en ce que**
- il comporte des congés de raccordement ménagés entre les pans de l'embase et les faces latérales du fût.

6. Moyen d'entraînement selon l'une des revendications 1 à 5 **caractérisé en ce que**
- il est réalisé en alliage de titane, ou en acier inoxydable, ou en alliage de nickel, ou en alliage d'aluminium.

7. Moyen d'entraînement selon l'une des revendications 4 à 6 **caractérisé en ce que**
- la surface tronconique de l'embase forme un angle d'au moins quarante-cinq degrés avec une base circulaire (18 ; 156) de l'embase.

8. Moyen d'entraînement selon l'une des revendications 4 à 7 **caractérisé en ce que**
- le tronc de cône possède une base polygonale.

9. Moyen d'entraînement selon l'une des revendications 1 à 8 **caractérisé en ce que**
- les pans en creux présentent un marquage et/ou un coloriage.

10. Moyen d'entraînement selon l'une des revendications 1 à 9 **caractérisée en ce que**
- l'embase présente une face d'appui inférieur sphérique (143), complétée et articulée, à la manière d'une rotule, avec une rondelle (141) permettant un rotulage, de diamètre supérieur à celui de l'embase, la rondelle présentant un logement concave (145) pour accueillir ladite embase.

11. Douille cylindrique de serrage et de desserrage d'un moyen d'entraînement polygonal (23 ; 26 ; 30 ; 33 ; 36 ; 38 ; 42 ; 119 ; 140 ; 151) selon l'une des revendications 1 à 10, la douille comportant une cavité (134) avec un fût creux polygonal (135) et une extrémité (136) ménagée pour être mise en butée contre une embase incorporée (6 ; 28 ; 50 ; 52 ; 60 ; 72 ; 92 ; 142 ; 152) du moyen d'entraînement, l'extrémité de la douille présentant des faces (137 ; 138) de forme complémentaire à celle de l'embase pour être plaquées contre elle lors de la mise en butée, **caractérisée en ce que**
- l'embase comporte des pans (24 ; 31 ; 34 ; 37 ; 39 ; 41 ; 43 ; 81 ; 97 ; 147 ; 153) en creux par rapport à une surface (50 ; 52) de l'embase et alignés avec des faces latérales (70 ; 71 ; 93 ; 96) d'un fût (7 ; 91) du moyen d'entraînement.

## Patentansprüche

1. Polygonales Antriebsmittel (23; 26; 30; 33; 36; 38; 42; 119; 140; 151) mit einem inkorporierten Bund (6; 28; 50; 52; 60; 72; 92; 142; 152), der Bereiche aufweist, **dadurch gekennzeichnet, dass** die Bereiche (24; 31; 34; 37; 39; 41; 43; 81; 97; 147; 153) gegenüber einer Fläche (50; 52) des Bundes vertieft und nach den Seitenflächen (70; 71; 93; 96) eines Schaftes (7; 91) des Antriebsmittels ausgerichtet sind.

2. Antriebsmittel nach Anspruch 1, **dadurch gekennzeichnet, dass** die vertieften Bereiche eben oder konkav sind.

3. Antriebsmittel nach einem der Ansprüche 1 bis 2, **dadurch gekennzeichnet, dass** es durch Schmieden mittels einer Matrize, Zerspanen, Gießen, Sintern oder Spritzgießen erhalten wird.

4. Antriebsmittel nach einem der Ansprüche 1 bis 3, **dadurch gekennzeichnet, dass** der Schaft hexagonal oder bihexagonal ist und der Bund kegelstumpfförmig ist.

5. Antriebsmittel nach einem der Ansprüche 1 bis 4, **dadurch gekennzeichnet, dass** es Verrundungen aufweist, die zwischen den Bereichen des Bundes und den Seitenflächen des Schaftes vorgesehen sind.

6. Antriebsmittel nach einem der Ansprüche 1 bis 5, **dadurch gekennzeichnet, dass** es aus einer Titanlegierung oder rostfreiem Stahl oder einer Nickellegierung oder einer Aluminiumlegierung hergestellt ist.

7. Antriebsmittel nach einem der Ansprüche 4 bis 6, **dadurch gekennzeichnet, dass** die kegelstumpfartige Fläche des Bundes einen Winkel von mindestens fünfundvierzig Grad mit einer kreisförmigen Grundfläche (18; 156) des Bundes bildet.

8. Antriebsmittel nach einem der Ansprüche 4 bis 7, **dadurch gekennzeichnet, dass** der Kegelstumpf eine polygonale Grundfläche hat.

9. Antriebsmittel nach einem der Ansprüche 1 bis 8, **dadurch gekennzeichnet, dass** die vertieften Bereiche eine Markierung und/oder Färbung aufweisen.

10. Antriebsmittel nach einem der Ansprüche 1 bis 9, **dadurch gekennzeichnet, dass** der Bund eine untere sphärische Anlagefläche (143) aufweist, die in der Art eines Kugelgelenks mit einer Scheibe (141), die ein Schwenken ermöglicht und deren Durchmesser größer ist als jener des Bundes, vervollständigt und angelenkt ist, wobei die Scheibe einen konkaven Sitz (145) zur Aufnahme des Bundes aufweist.

11. Zylindrische Hülse zum Spannen und Lösen eines polygonalen Antriebsmittels (23; 26; 30; 33; 36; 38; 42; 119; 140; 151) nach einem der Ansprüche 1 bis 10, wobei die Hülse eine Vertiefung (134) mit einem polygonalen vertieften Schaft (135) und einem Ende (136), das dazu vorgesehen ist, in Anlage gegen einen inkorporierten Bund (6; 28; 50; 52; 60; 72; 92; 142; 152) des Antriebsmittels gebracht zu werden, aufweist, wobei das Ende der Hülse Flächen (137; 138) aufweist, deren Form komplementär zu jener des Bundes ist, um während des In-Anlage-Bringens gegen sie gepresst zu werden, **dadurch gekennzeichnet, dass** der Bund Bereiche (24; 31; 34; 37; 39; 41; 43; 81; 97; 147; 153) aufweist, die gegenüber einer Fläche (50; 52) des Bundes vertieft und nach den Seitenflächen (70; 71; 93; 96) eines Schaftes (7; 91) des Antriebsmittels ausgerichtet sind.

## Claims

1. Polygonal drive means (23; 26; 30; 33; 36; 38; 42; 119; 140; 151) having an incorporated flange (6; 28; 50; 52; 60; 72; 92; 142; 152) comprising facets, **characterized in that**
- the facets (24; 31; 34; 37; 39; 41; 43; 81; 97; 147; 153) are recessed with respect to a surface (50; 52) of the flange and aligned with lateral faces (70; 71; 93; 96) of a barrel (7; 91) of the drive means.

2. Drive means according to Claim 1, **characterized in that**
- the recessed facets are planar or concave.

3. Drive means according to one of Claims 1 and 2, **characterized in that**
- it is obtained by die forging, by machining, by casting, sintering or by plastic injection moulding.

4. Drive means according to one of Claims 1 to 3, **characterized in that**
- the barrel is hexagonal or double-hexagonal and the flange is frustoconical.

5. Drive means according to one of Claims 1 to 4, **characterized in that**
- it comprises fillets formed between the facets of the flange and the lateral faces of the barrel.

6. Drive means according to one of Claims 1 to 5, **characterized in that**
- it is made of titanium alloy or of stainless steel or of nickel alloy or of aluminium alloy.

7. Drive means according to one of Claims 4 to 6, **characterized in that**
- the frustoconical surface of the flange forms an angle of at least forty-five degrees with a circular base (18; 156) of the flange.

8. Drive means according to one of Claims 4 to 7, **characterized in that**
- the cone frustum has a polygonal base.

9. Drive means according to one of Claims 1 to 8, **characterized in that**
- the recessed facets have marking and/or colouring.

10. Drive means according to one of Claims 1 to 9, **characterized in that**
- the flange has a spherical lower bearing face (143) that is complete and articulated, in the manner of a ball joint, with a washer (141) that allows swiveling, of a diameter greater than that of the flange, the washer having a concave housing (145) to accommodate the said flange.

11. Cylindrical socket for tightening and loosening a polygonal drive means (23; 26; 30; 33; 36; 38; 42; 119; 140; 151) according to one of Claims 1 to 10, the socket comprising a cavity (134) with a polygonal hollow barrel (135) and an end (136) made to come into abutment against an incorporated flange (6; 28; 50; 52; 60; 72; 92; 142; 152) of the drive means, the end of the socket having faces (137; 138) of a shape that complements that of the flange so as to be pressed firmly against it when brought into abutment, **characterized in that**
- the flange comprises facets (24; 31; 34; 37; 39; 41; 43; 81; 97; 147; 153) that are recessed with respect to a surface (50; 52) of the flange and that are aligned with lateral faces (70; 71; 93; 96) of a barrel (7; 91) of the drive means.
